# FASCICULE DE BREVET EUROPEEN

(11) **EP 1 177 936 B1**
(45) Date de publication et mention de la délivrance du brevet: **21.11.2007**
(21) Numéro de dépôt: 01401762.8
(22) Date de dépôt: 02.07.2001
(51) Int. Cl.: B60N 2/36, B60N 2/48, B60N 2/18

(54) **Assise à dossier rabattable muni d'appuis-tête**
Sitz mit umklappbarer Rückenlehne versehen mit Kopfstütze
Seat with folding back-rest equipped with head rests

(30) Priorité: 20.07.2000 FR 0009535
(43) Date de publication de la demande: 06.02.2002
(73) Titulaire: Peugeot Citroen Automobiles SA, 92200 Neuilly sur Seine (FR)
(72) Inventeur: Roy, Jean Pascal, 94110 Arcueil (FR)
(74) Mandataire: Bentz, Jean-Paul

(56) Documents cités:
- WO-A-00/41910
- WO-A-99/58370
- US-A- 3 311 405
- US-A- 4 699 418
- US-A- 5 772 283
- US-A- 5 971 467

## Description

La présente invention concerne, de façon générale, une assise rabattable permettant notamment d'équiper un volume arrière d'un véhicule automobile.

Plus précisément, l'invention concerne une assise essentiellement destinée à équiper un volume arrière d'un véhicule à moteur et comprenant un coussin soutenu par un plancher formant un fond pour le volume arrière, un dossier, et des articulations droite et gauche reliant chacune une partie inférieure latérale du dossier à une partie postérieure latérale du coussin et permettant de faire basculer le dossier vers le coussin.

L'invention concerne également une assise comprenant des liaisons droite et gauche s'étendant chacune entre le plancher et la zone d'articulation droite ou gauche correspondante, ces liaisons prenant au moins une première configuration dans laquelle la partie postérieure du coussin est adjacente au plancher tandis que le dossier est dressé.

Des assises de ce type, dont l'encombrement peut être considérablement réduit par basculement du dossier, sont aujourd'hui couramment utilisées sur les véhicules automobiles en tant qu'assises arrière, pour permettre d'augmenter la capacité du coffre lorsque ces assises sont inoccupées.

La publication US 3 311 405 présente une assise telle que décrite précédemment.

Néanmoins, la mise en oeuvre concrète de cette solution connue soulève parfois des difficultés d'agencement considérables, en particulier dans le cas de véhicules compacts, dans lesquels le dossier de cette assise muni de ses appuis-tête heurte, au cours de son basculement, le dossier de l'assise avant d'avoir atteint une position horizontale ou sensiblement horizontale.

L'invention, qui se situe dans ce contexte, a précisément pour but de proposer une assise de structure simple et néanmoins capable de résoudre ces difficultés.

A cette fin, l'assise de l'invention, par ailleurs conforme à la définition générique qu'en donne le préambule ci-dessus, est caractérisée en ce que les liaisons droite et gauche prennent une seconde configuration dans laquelle la partie postérieure du coussin est soulevée relativement au plancher en formant un espace de dégagement tandis que le dossier est rabattu sur le coussin en position sensiblement horizontale.

Cette assise peut également comporter une ou plusieurs des caractéristiques suivantes, prises isolément ou selon toutes les combinaisons techniquement possibles :
- le dossier est muni d'au moins un appui-tête, chaque appui-tête étant monté de façon amovible sur le dossier pour pouvoir être démonté et logé dans l'espace de dégagement ;
- chaque articulation comprend une joue qui relie la partie postérieure latérale du coussin à la partie inférieure latérale du dossier, et sur laquelle le dossier est monté pivotant ;
- chaque joue porte un doigt faisant saillie latéralement, l'assise étant pourvue de platines latérales dressées solidaires du plancher et dotées chacune d'une rainure dans laquelle s'engage un doigt correspondant, chaque doigt pouvant adopter dans la rainure une première position dans laquelle les liaisons adoptent la première configuration, et une deuxième position pour laquelle lesdites liaisons adoptent le deuxième configuration ;
- la rainure comporte une branche postérieure et une branche antérieure s'étendant vers le bas de part et d'autres d'un point haut commun situé à un niveau supérieur jusqu'à des premier et deuxième niveaux inférieurs respectifs, dont le second est intermédiaire entre le premier niveau inférieur et le niveau supérieur ;
- la rainure a une forme générale d'arc de cercle à concavité dirigée sensiblement postéro-antérieurement et s'étend à partir d'un point bas postérieur correspondant à la première position du doigt vers un haut antérieur correspondant à la deuxième position du doigt ;
- la rainure comporte, au niveau du point haut antérieur, une découpe qui s'étend de façon radialement interne et qui délimite un logement de réception du doigt dans sa deuxième position ;
- chaque platine est pourvue d'un passage s'étendant à partir de la rainure et débouchant vers l'extérieur pour le montage, de manière amovible, de l'assise sur le plancher ;
- chaque liaison comporte en outre des première et deuxième biellettes articulées par une de leurs extrémités, la première biellette étant montée de façon pivotante par son autre extrémité sur l'une desdites platines, la deuxième biellette étant montée de manière pivotante, par son autre extrémité, sur le doigt correspondant ;
- chaque joue est montée de façon pivotante sur une bielle elle-même montée oscillante sur le plancher ;
- les liaisons comportent chacune une béquille angulairement déplaçable par rapport au coussin entre une position escamotée correspondant à la première configuration de la liaison et une position active déployée correspondant à la deuxième configuration de la liaison et sur laquelle repose l'assise dans ladite deuxième configuration ;
- elle comprend des paires droite et gauche d'organes de guidage reliant chacune une partie antérieure latérale du coussin au plancher et permettant un mouvement postéro-antérieur du coussin, chaque paire d'organes de guidage comprenant une came de guidage solidaire du plancher et un axe de guidage solidaire du coussin et engagé dans la came de guidage ;
- elle comporte en outre des organes de guidage droite et gauche reliant chacun une partie antérieure latérale du coussin au plancher et permettant un mouvement postéro-antérieur du coussin, chaque organe comportant une bielle montée pivotante par une première extrémité sur le coussin et par une deuxième extrémité sur le plancher ;
- le dossier est muni d'une plaque séparatrice montée pivotante sur la face postérieure du dossier entre une première position escamotée de repos et une deuxième position déployée dans laquelle elle constitue une paroi séparatrice du volume arrière du véhicule.

D'autres caractéristiques et avantages de l'invention ressortiront clairement de la description qui en est faite ci-après, à titre indicatif et nullement limitatif, en référence aux dessins annexés, dans lesquels :
- La figure 1 est une vue latérale d'un premier mode de réalisation d'une assise conforme à l'invention, représentée avec son dossier dressé;
- La figure 2 est une vue latérale de l'assise de la figure 1, représentée avec son dossier rabattu et dans une configuration transitoire;
- La figure 3 est une vue latérale de l'assise de la figure 1, représentée avec son dossier rabattu et dans une configuration stable ;
- La figure 4 est une vue latérale d'un deuxième mode de réalisation d'une assise conforme à l'invention, représentée avec son dossier dressé ;
- La figure 5 illustre l'assise de la figure 4 dans une position transitoire du dossier ;
- La figure 6 représente l'assise de la figure 4 en position rabattue du dossier ;
- La figure 7 est une vue latérale d'un troisième mode de réalisation d'une assise conforme à l'invention, représentée avec son dossier dressé ;
- La figure 8 montre l'assise de la figure 7, avec son dossier rabattu;
- La figure 9 est une vue latérale d'un quatrième mode de réalisation d'une assise conforme à l'invention, représenté avec son dossier dressé ; et
- La figure 10 montre l'assise de la figure 9, avec son dossier rabattu.

Comme le montre chacune des figures, l'invention concerne une assise rabattable permettant notamment d'équiper un volume arrière 1 d'un véhicule automobile.

Sur ces figures des éléments identiques portent les mêmes références.

Cette assise comprend, de façon classique, un coussin 2, un dossier 3, et des articulations telles que 5, disposées sur les côtés droit et gauche du coussin et du dossier.

Le coussin 2 est rendu solidaire du plancher 10 du volume arrière 1, et le dossier 3 est muni d'un ou plusieurs appuis-tête 4.

Chaque articulation 5 comprend un axe d'articulation 50 par exemple monté pivotant dans une joue 51 qui relie la partie postérieure latérale 21 du coussin à la partie inférieure latérale 31 du dossier, et qui permet de faire basculer le dossier 3 vers le coussin 2.

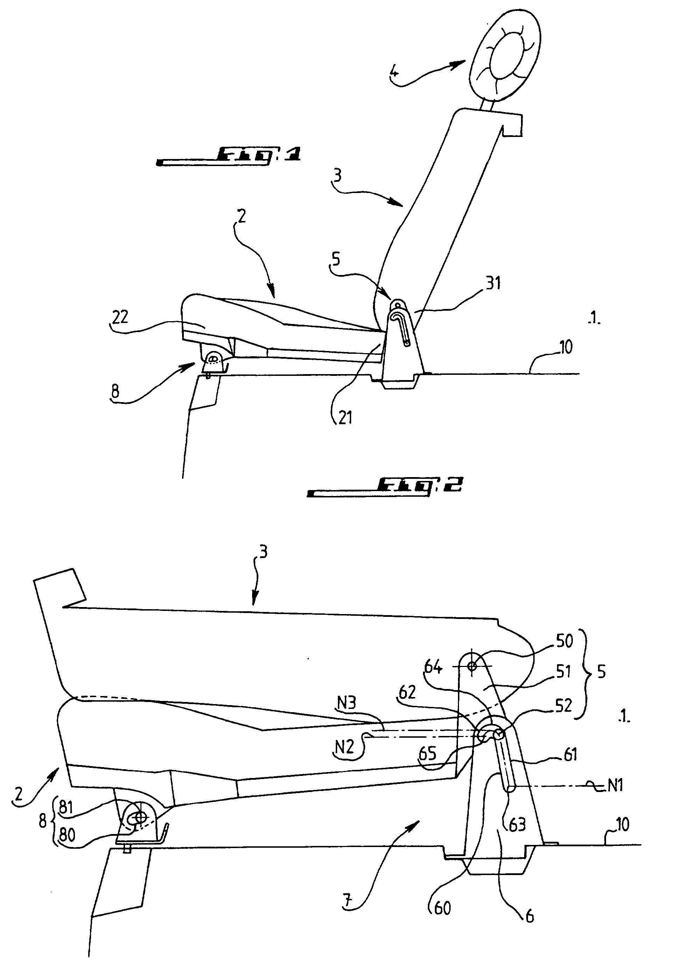

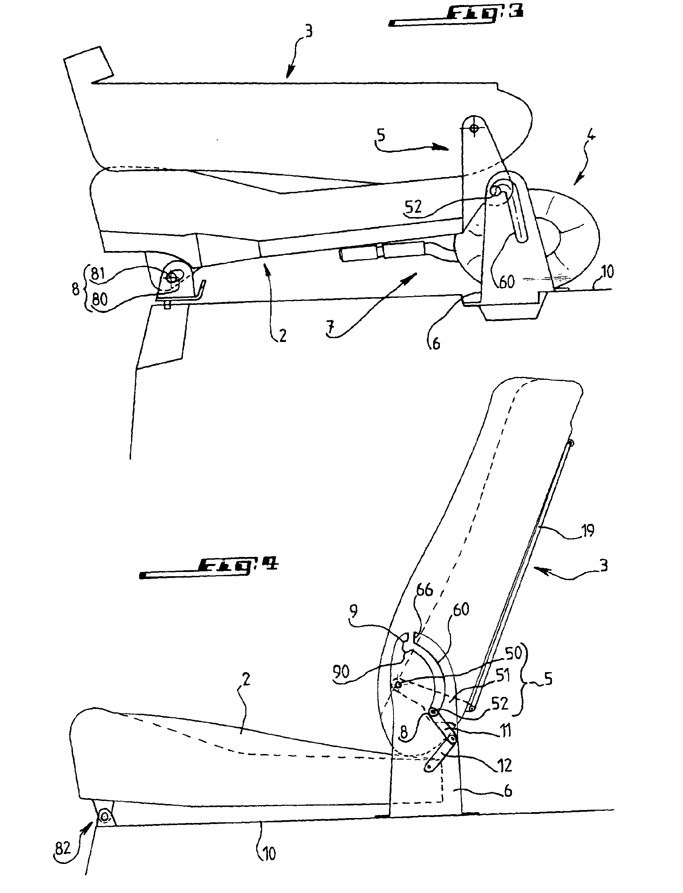

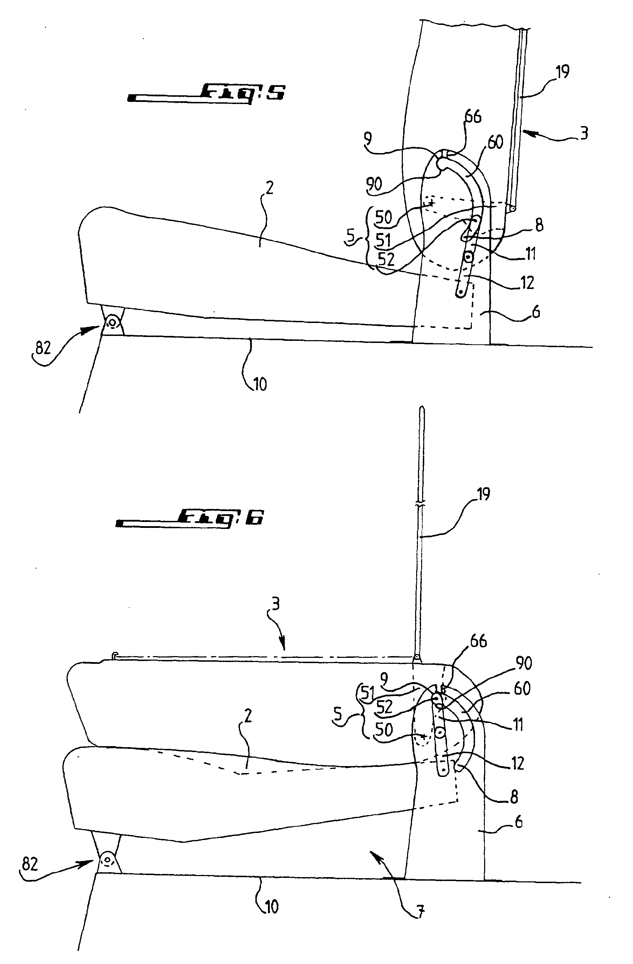

Par ailleurs, l'assise est dotée de liaisons droite et gauche s'étendant respectivement entre le plancher et la zone d'articulation droite et gauche correspondante du dossier 3 sur le coussin 2, ces liaisons prenant au moins une première configuration, visible notamment sur la figure 1, dans laquelle la partie postérieure 21 du coussin est adjacente au plancher tandis que le dossier est dressé, et une seconde configuration, visible notamment sur la figure 3, dans laquelle la partie postérieure du coussin est séparée du plancher tandis que le dossier est rabattu sur le coussin 2 en position sensiblement horizontale.

Selon un premier exemple de réalisation, représenté aux figures 1 à 3, les liaisons droite et gauche comportent chacune une platine 6 qui est solidaire du plancher 10 et qui présente une rainure 60. Chaque articulation 5 comprend, quant à elle, un doigt 52, par exemple porté par la joue 51 et faisant saillie latéralement, ce doigt étant engagé à coulissement dans la rainure 60.

Le doigt 52 peut adopter dans la rainure 60 une première position, représentée à la figure 1, pour laquelle la liaison correspondante adopte la première configuration, c'est-à-dire pour laquelle la partie postérieure 21 du coussin est adjacente au plancher 10, et une seconde position, représentée à la figure 3, pour laquelle la liaison adopte la seconde configuration, c'est-à-dire pour laquelle la partie postérieure 21 du coussin est séparée du plancher par un espace de dégagement 7.

Chaque appui-tête 4 est monté de façon amovible sur le dossier 3, de sorte qu'il peut être démonté et logé dans l'espace de dégagement 7, comme illustré à la figure 3.

Comme le montre le mieux la figure 2, la rainure 60 comporte par exemple une branche postérieure 61 et une branche antérieure 62.

Ces deux branches s'étendent vers le bas de part et d'autre d'un point haut commun 64 situé à un niveau supérieur N3, jusqu'à des points bas respectifs 63, 65 situés à des niveaux inférieurs respectifs N1 et N2.

Le second niveau N2, c'est-à-dire le niveau du point bas de la branche antérieure 62 est intermédiaire entre le niveau supérieur N3 et le premier niveau inférieur N1, c'est-à-dire le niveau du point bas de la branche postérieure 61.

Dans ces conditions, l'assise peut adopter deux configurations stables, respectivement illustrées aux figures 1 et 3.

La première configuration, qui est illustrée à la figure 1 et qui permet l'utilisation normale de l'assise, est obtenue en plaçant le doigt 52 au point bas 63 de la branche postérieure 61 de la rainure 60.

La seconde configuration, qui est illustrée à la figure 3 et dans laquelle l'assise est condamnée au profit d'une capacité accrue du volume arrière 10, est celle qu'adopte l'assise lorsque le doigt 52 atteint le point bas 65 de la branche antérieure 62 de la rainure 60.

Comme le montrent le mieux les figures 2 et 3, le coussin peut par ailleurs être retenu sur le plancher 10 et guidé par rapport à lui au moyen de paires 8 d'organes de guidage prévues sur les côtés droit et gauche du coussin.

Plus précisément, chaque paire 8 relie la partie antérieure latérale 22 du coussin au plancher 10 et permet un mouvement du coussin 2 sensiblement d'arrière vers l'avant, lorsque le doigt 52 passe du point bas 63 au point bas 65.

A cette fin, chaque paire 8 d'organes de guidage comprend par exemple une came de guidage 80, qui est solidaire du plancher 10, et un axe de guidage 81, qui est solidaire du coussin 2 et qui est engagé dans la came de guidage 80.

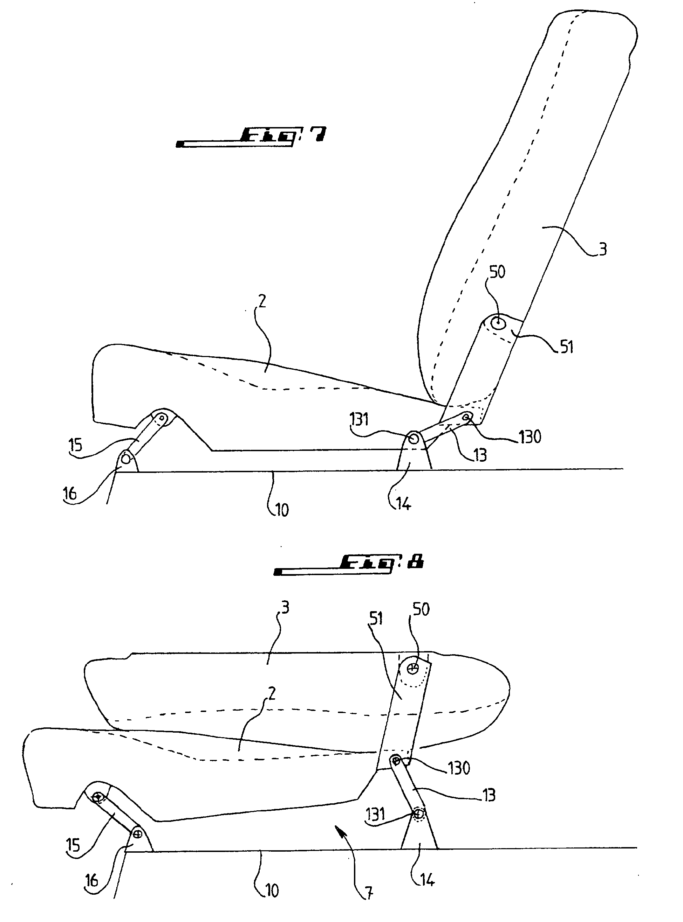

On va maintenant décrire en référence aux figures 4 à 6 un deuxième mode de réalisation d'une assise conforme à l'invention.

Selon cet exemple de réalisation, la rainure 60 adopte une forme courbe, à rayons de courbure dirigé généralement postéro-antérieurement, et s'étend entre un point bas postérieur 8 et un point haut antérieur 9.

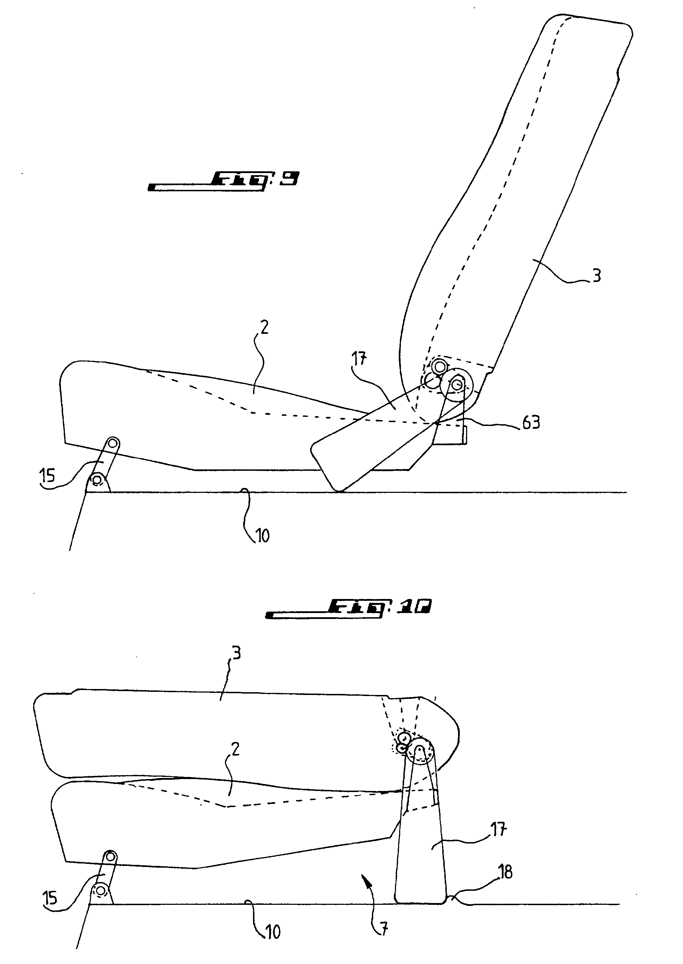

Comme dans l'exemple de réalisation décrit en référence aux figures 1 à 3, un doigt 52, par exemple porté par la joue 51 s'engage à coulissement dans la rainure 60 entre une première position, visible sur la figure 4, dans laquelle il se situe au point bas postérieur 8 de la rainure 60 et dans laquelle l'assise adopte la première configuration, et une deuxième position, visible sur la figure 6, dans laquelle le doigt 52 se situe au niveau du point haut antérieur 9, et pour laquelle l'assise adopte la deuxième configuration, en passant par une position intermédiaire, représentée sur la figure 5.

Au niveau du point haut antérieur 9, la rainure 60 présente un logement 90, par exemple formé en diminuant le rayon de courbure de la rainure 60, ce logement étant destiné à recevoir le doigt 52 pour stabiliser l'assise lorsqu'elle se situe dans la deuxième configuration.

Comme on le voit sur ces figures 4 à 6, selon ce mode de réalisation, les liaisons s'étendant entre le plancher et l'articulation 5 sont constituées chacune par une association de deux biellettes 11 et 12 articulées l'une sur l'autre.

Une première biellette 11 est montée à pivotement sur le doigt 52, par l'une de ses extrémités et, par son extrémité opposée, sur une première extrémité de l'autre biellette 12. L'autre extrémité de cette dernière biellette est, quant à elle, montée oscillante sur le coussin.

Comme on le conçoit, selon ce mode de réalisation, le basculement du dossier 3 provoque de façon automatique le soulèvement du coussin 2 de la première configuration vers la deuxième configuration.

En effet, le cheminement du doigt 52 dans la lumière 60 du point bas postérieur 8 vers le point haut antérieur 9 provoque, tout d'abord, l'extension des deux biellettes 11 et 12, puis un soulèvement du coussin 2 de manière à délimiter l'espace de dégagement 7.

De façon optionnelle, selon ce mode de réalisation, la platine 6 peut être dotée d'un passage 66, positionné par exemple au voisinage du point haut 9, s'étendant à partir de la rainure 60 et débouchant vers l'extérieur de la platine 6 de manière à permettre le montage du dossier 3 de façon amovible.

On notera enfin que le mouvement général de l'assise étant un mouvement rotation correspondant à la forme générale de la rainure 60, la partie antérieure du coussin peut être montée pivotante autour d'un axe 82 solidaire du plancher 10.

On conforme alors la rainure et l'on positionne l'axe 82 de telle manière que ce dernier soit confondu avec le centre du cercle défini par la rainure.

Selon un troisième mode de réalisation, visible sur les figures 7 et 8, les liaisons droite et gauche reliant le plancher et la zone d'articulation du dossier 3 par rapport au coussin 2 de l'assise sont constituées chacune par des bielles 13 dont une première extrémité 130 est montée pivotante sur la partie postérieure latérale 21 du coussin et sur la joue 51 et dont une deuxième extrémité 131 est montée oscillante sur une chape 14.

Selon cet exemple de réalisation, le dossier 3 s'articule, autour de l'axe d'articulation 50, sur la joue 51, cette dernière s'articulant également sur le coussin 2 et sur la bielle 13.

Comme on le voit sur ces figures 7 et 8, une deuxième paire de bielles 15 est également prévue sur la partie antérieure latérale du coussin 2, chacune de ces bielles étant montées de façon pivotante, par une première extrémité, sur le coussin 2 et, par une extrémité opposée, sur une chape 16 solidaire du plancher 10.

Pour procéder au basculement de cette assise, il convient tout d'abord de faire basculer le dossier 3 vers le coussin 2 puis de déplacer l'ensemble vers l'avant pour adopter la position visible sur la figure 8, dans laquelle les liaisons entre le coussin 2 et le plancher 10 prennent la deuxième configuration pour former l'espace de dégagement 7.

Ce mouvement postéro-antérieure de l'assise permet d'augmenter sensiblement le volume arrière du véhicule.

On va maintenant décrire, en référence aux figures 9 et 10 un quatrième mode de réalisation d'une assise conforme à l'invention.

Comme on le voit sur ces figures, selon ce mode de réalisation, les liaisons entre le coussin 2 et le plancher 10 constituant le fond du volume arrière du véhicule comportent chacun une béquille 17 montée angulairement déplaçable par rapport au coussin 2 entre une position escamotée, visible sur la figure 9, qui est adoptée lorsque le coussin 2 est adjacent au plancher 10 et le dossier 3 est en position dressée, et une position active déployée, visible sur la figure 10, dans laquelle elle s'étend selon une direction sensiblement verticale. Dans cette position déployée le dossier 3 est basculé contre le coussin 2, l'assise repose sur les béquilles et est espacée du plancher 10 pour délimiter l'espace de dégagement 7.

Selon ce mode de réalisation, de préférence, le plancher 10 est doté d'une butée 18 de limitation de placement angulaire de la béquille 17, contre laquelle cette dernière vient prendre appui en position active déployée.

On notera que, selon ce mode de réalisation, la partie antérieure du coussin 2 est montée sur le plancher 10 par l'intermédiaire d'une bielle 15, identique à la bielle utilisée pour le montage du coussin 2 de l'assise selon le troisième mode de réalisation décrit précédemment en référence aux figures 7 et 8.

On notera enfin que, dans les différents modes de réalisation qui viennent d'être décrit, comme représenté aux figures 4 à 6, la face postérieure du dossier 3 peut être pourvue d'une plaque séparatrice 19 montée pivotante sur cette face postérieure entre une position escamotée de repos, visible sur les figures 4 et 5 et une position déployée, visible sur la figure 6, dans laquelle elle s'étend verticalement pour constituer une paroi séparatrice du volume arrière 1 du véhicule.

Par exemple, lorsque le dossier 3 est en position dressée, cette plaque 19 peut constituer une tablette.

## Revendications

1. Assise, notamment pour équiper un volume arrière (1) d'un véhicule à moteur, cette assise comprenant un coussin (2) soutenu par un plancher (10) formant un fond pour le volume arrière, un dossier (3), des articulations (5) droite et gauche reliant chacune une partie inférieure latérale (31) du dossier (3) à une partie postérieure latérale (21) du coussin (2) et permettant de faire basculer le dossier (3) vers le coussin (2), et des liaisons droite et gauche s'étendant chacune entre le plancher et la zone d'articulation droite ou gauche correspondante, ces liaisons prenant au moins une première configuration dans laquelle la partie postérieure (21) du coussin est adjacent du plancher (10) tandis que le dossier est dressé, **caractérisée en ce que** les liaisons droite et gauche prennent une seconde configuration dans laquelle la partie postérieure (21) du coussin est soulevée relativement au plancher en formant un espace de dégagement (7), tandis que le dossier est rabattu sur le coussin (2) en position sensiblement horizontale.

2. Assise selon la revendication 1, **caractérisée en ce que** le dossier (3) est muni d'au moins un appui-tête (4), et **en ce que** chaque appui-tête (4) est monté de façon amovible sur le dossier (3) pour pouvoir être démonté et logé dans l'espace de dégagement (7).

3. Assise selon l'une des revendications 1 et 2, **caractérisée en ce que** chaque articulation comprend une joue (51) qui relie la partie postérieure latérale (21) du coussin à la partie inférieure latérale (31) du dossier, et sur laquelle le dossier (3) est monté pivotant.

4. Assise selon la revendication 3, **caractérisée en ce que** chaque joue (51) porte un doigt (52) faisant saillie latéralement et **en ce que** l'assise est pourvue de platines latérales dressées solidaires du plancher et dotées chacune d'une rainure (60) dans laquelle s'engage un doigt correspondant, chaque doigt pouvant adopter dans la rainure une première position pour laquelle les liaisons adoptent la première configuration, et une deuxième position pour laquelle lesdites liaisons adoptent la deuxième configuration.

5. Assise selon la revendication 4, **caractérisée en ce que** la rainure (60) comporte une branche postérieure (61) et une branche antérieure (62) s'étendant vers le bas, de part et d'autre d'un point haut commun (64) situé à un niveau supérieur (N3) jusqu'à des premier et deuxième points bas respectifs (63, 65) situés à des premier et deuxième niveaux inférieurs respectifs (N1, N2), dont le deuxième (N2) est intermédiaire entre le premier niveau inférieur (N1) et le niveau supérieur (N3).

6. Assise selon la revendication 4, **caractérisée en ce que** la rainure (60) a une forme générale d'arc de cercle, à concavité dirigée sensiblement postéro-antérieurement, et s'étend à partir d'un point bas postérieur (8) correspondant à la première position du doigt vers un point haut antérieur (9) correspondant à la deuxième position du doigt.

7. Assise selon la revendication 6, **caractérisée en ce que** la rainure comporte, au niveau du point haut antérieur, une découpe (90) qui s'étend de façon radialement interne et qui délimite un logement de réception du doigt, dans sa deuxième position.

8. Assise selon une quelconque des revendications 4 à 7, **caractérisée en ce que** chaque platine est pourvue d'un passage (66) s'étendant à partir de la rainure et débouchant vers l'extérieur pour le montage, de manière amovible, de l'assise sur le plancher.

9. Assise selon l'une quelconque des revendications 6 à 8, **caractérisée en ce que** chaque liaison comporte des première et deuxième biellettes (11, 12) articulées par une de leurs extrémités, la première biellette (12) étant montée, par son autre extrémité, de façon pivotante sur l'une desdites platines, la deuxième biellette (11) étant montée de manière pivotante, par son autre extrémité, sur le doigt correspondant.

10. Assise selon la revendication 3, **caractérisée en ce que** chaque joue est montée de façon pivotante sur une bielle (13), elle-même montée oscillante sur le plancher (10).

11. Assise selon la revendication 3, **caractérisée en ce que** les liaisons comportent chacune une béquille (17) angulairement déplaçable par rapport au coussin entre une position escamotée correspondant à la première configuration de la liaison et une position active déployée correspondant à la deuxième configuration de la liaison et sur laquelle repose l'assise dans ladite deuxième configuration.

12. Assise selon l'une quelconque des revendications 1 à 11, **caractérisée en ce qu'**elle comprend des paires (8) droite et gauche d'organes de guidage reliant chacune une partie antérieure latérale (22) du coussin au plancher (10) et permettant un mouvement postéro-antérieur du coussin (2), chaque paire d'organes de guidage comprenant une came de guidage (80) solidaire du plancher (10) et un axe de guidage (81) solidaire du coussin (2) et engagé dans la came de guidage (80).

13. Assise selon l'une quelconque des revendications 1 à 11, **caractérisée en ce qu'**elle comporte en outre des organes de guidage droite et gauche reliant chacun une partie antérieure latérale du coussin (2) au plancher (10) et permettant un mouvement postéro-antérieur du coussin (2), chaque organe comportant une bielle (15) montée pivotante, par une première extrémité, sur le coussin et, par une deuxième extrémité, sur le plancher (10).

14. Assise selon l'une quelconque des revendications 1 à 13, **caractérisée en ce que** le dossier (3) est muni d'une plaque séparatrice (19) montée pivotante sur la face postérieure du dossier entre une position escamotée de repos et une position déployée dans laquelle elle constitue une paroi séparatrice du volume arrière du véhicule.

## Claims

1. Seat bottom, in particular to equip a rear volume (1) of a motor vehicle, this seat bottom comprising a cushion (2) supported by a floor (10) forming a bottom for the rear volume, a back (3), right and left articulations (5) each connecting a lower side part (31) of the back (3) to a rear side part (21) of the cushion (2) and making it possible to tilt the back (3) toward the cushion (2), and right and left links each extending toward the floor and the corresponding right or left articulation area, these links assuming at least a first configuration in which the rear part (21) of the cushion is adjacent to the floor (10) while the back is upright, **characterized in that** the right and left links assume a second configuration in which the rear part (21) of the cushion is raised relative to the floor by forming a clearance gap (7) when the back is lowered onto the cushion (2) in a substantially horizontal position.

2. Seat bottom according to claim 1, **characterized in that** the back (3) is provided with at least one head rest (4), and **in that** each head rest (4) is removably assembled on the back (3) such that it can be disassembled and lodged in the clearance space (7).

3. Seat bottom according to one of claims 1 and 2, **characterized in that** each articulation comprises a flange (51) which connects the rear side part (21) of the cushion to the lower side part (31) of the back, and on which the back (3) is pivotably assembled.

4. Seat bottom according to claim 3, **characterized in that** each flange (51) has a finger (52) protruding laterally and **in that** the seat bottom is provided with lateral plates made integral with the floor and each provided with a groove (60) in which a corresponding finger engages, each finger being able to adopt, in the groove, a first position for which the links adopt the first configuration, and a second position for which said links adopt the second configuration.

5. Seat bottom according to claim 4, **characterized in that** the groove (60) comprises a rear branch (61) and a forward branch (62) extending downward, on either side of a shared high point (64) located at a higher level (N3) until first and second respective low points (63, 65) located at first and second respective lower levels (N1, N2), the second of which (N2) is intermediate between the first lower level (N1) and the high level (N3).

6. Seat bottom according to claim 4, **characterized in that** the groove (60) is generally circular arc shaped, with a concavity oriented substantially toward the rear and front-to-back, and extends from a low rear point (8) corresponding to the first position of the finger toward a high front point (9) corresponding to the second position of the finger.

7. Seat bottom according to claim 6, **characterized in that** the groove comprises, at the level of the high front point, a notch (90) which extends radially internally and which defines a housing for receiving the finger, in its second position.

8. Seat bottom according to any of claims 4 to 7, **characterized in that** each plate is provided with a passage (66) extending from the groove and leading toward the outside for removable assembly of the seat bottom on the floor.

9. Seat bottom according to any of claims 6 to 8, **characterized in that** each link comprises first and second connecting rods (11, 12) articulated by one of their ends, the first connecting rod (12) being assembled, by its other end, pivotably on one of said plates, the second connecting rod (11) being assembled pivotably, by its other end, on the corresponding finger.

10. Seat bottom according to claim 3, **characterized in that** each flange is assembled pivotably on a connecting rod (13), said rod being mounted oscillating on the floor (10).

11. Seat bottom according to claim 3, **characterized in that** the links each comprise an arm (17) angularly movable relative to the cushion between a retracted position corresponding to the first configuration of the link and a deployed active position corresponding to the second configuration of the link and on which the seat bottom rests in said second configuration.

12. Seat bottom according to any of claims 1 to 11, **characterized in that** it comprises right and left pairs (8) of guide members each connecting a front lateral part (22) of the cushion to the floor (10) and allowing front-to-back movement of the cushion (2), each pair of guide members comprising a guide cam (80) integral with the floor (10) and a guide axis (81) integral with the cushion (2) and engaged in the guide cam (80).

13. Seat bottom according to any of claims 1 to 11, **characterized in that** it also comprises right and left guide members each connecting a front lateral part of the cushion (2) to the floor (10) and allowing front-to-back movement of the cushion (2), each member comprising a connecting rod (15) mounted in rotation, by a first end, on the cushion and, by a second end, on the floor (10).

14. Seat bottom according to any of claims 1 to 13, **characterized in that** the back (3) is provided with a separator plate (19) mounted pivotably on the rear surface of the back between a retracted at rest position and a deployed position in which it constitutes a separating wall from the rear volume of the vehicle.

## Patentansprüche

1. Sitz, vor allem zur Ausstattung eines hinteren Raums (1) eines Motorfahrzeugs, wobei dieser Sitz ein von einem Boden (10) abgestütztes Polster (2) umfasst, der für den hinteren Raum eine Grundfläche bildet, eine Rückenlehne (3), Gelenke (5) rechts und links, die jeweils einen seitlichen unteren Abschnitt (31) der Rückenlehne (3) mit einem seitlichen hinteren Abschnitt (21) des Polsters (2) verbinden und gestatten, die Rückenlehne (3) in Richtung des Polsters (2) zu kippen, und rechte und linke Verbindungen, die sich jeweils zwischen dem Boden und dem entsprechenden rechten oder linken Gelenkbereich erstrecken, wobei diese Verbindungen mindestens eine erste Konfiguration einnehmen, in der der hintere Abschnitt (21) des Polsters an den Boden (10) angrenzt, währenddessen die Rückenlehne aufgerichtet ist, **dadurch gekennzeichnet, dass** die rechten und linken Verbindungen eine zweite Konfiguration einnehmen, in der der hintere Abschnitt (21) des Polsters relativ zum Boden angehoben ist und einen Freiraum (7) bildet, währenddessen die Rückenlehne auf das Polster (2) in etwa horizontaler Stellung heruntergeklappt ist.

2. Sitz nach Anspruch 1, **dadurch gekennzeichnet, dass** die Rückenlehne (3) mit mindestens einer Kopfstütze (4) ausgestattet ist, und dadurch, dass jede Kopfstütze (4) lösbar auf der Rückenlehne (3) befestigt ist, um demontierbar und in dem Freiraum (7) unterbringbar zu sein.

3. Sitz nach einem der Ansprüche 1 und 2, **dadurch gekennzeichnet, dass** jedes Gelenk eine Wange (51) umfasst, die den seitlichen hinteren Abschnitt (21) des Polsters mit dem seitlichen unteren Abschnitt (31) der Rückenlehne verbindet, und auf der die Rückenlehne (3) schwenkbar befestigt ist.

4. Sitz nach Anspruch 3, **dadurch gekennzeichnet, dass** jede Wange (51) einen Finger (52) trägt, der seitlich übersteht und dadurch, dass der Sitz mit seitlichen aufgerichteten Platten versehen ist, die mit dem Boden verbunden sind und jeweils mit einer Rille (60) ausgestattet sind, in die ein entsprechender Finger eingreift, wobei jeder Finger in der Rille eine erste Stellung einnehmen kann, für die die Verbindungen eine erste Konfiguration einnehmen, und eine zweite Stellung, für die die besagten Verbindungen die zweite Konfiguration einnehmen.

5. Sitz nach Anspruch 4, **dadurch gekennzeichnet, dass** die Rille (60) einen hinteren Schenkel (61) und einen vorderen Schenkel (62) umfasst, die sich auf der einen und der anderen Seite eines gemeinsamen Hochpunkts (64), der sich auf einer oberen Ebene (N3) befindet, nach unten erstrecken bis zu entsprechenden ersten und zweiten Tiefpunkten (63, 65), die sich auf entsprechenden ersten und zweiten unteren Ebenen (N1, N2) befinden, wobei die zweite Ebene (N2) zwischen der ersten unteren Ebene (N1) und der oberen Ebene (N3) ist.

6. Sitz nach Anspruch 4, **dadurch gekennzeichnet, dass** die Rille (60) eine allgemeine Kreisbogenform hat, mit etwa nach hinten und vorn gerichteter Konkavität, und sich ab einem hinteren Tiefpunkt (8), der der ersten Stellung des Fingers entspricht, zu einem vorderen Hochpunkt (9) erstreckt, der der zweiten Stellung des Fingers entspricht.

7. Sitz nach Anspruch 6, **dadurch gekennzeichnet, dass** die Rille auf Ebene des vorderen Hochpunkts einen Ausschnitt (90) aufweist, der sich radial intern erstreckt und der eine Aufnahme für die Ablage des Fingers in seiner zweiten Stellung begrenzt.

8. Sitz nach einem der Ansprüche 4 bis 7, **dadurch gekennzeichnet, dass** jede Platte mit einem Durchgang (66) versehen ist, der sich ab der Rille erstreckt und nach außen mündet, für die lösbare Montage des Sitzes auf dem Boden.

9. Sitz nach einem der Ansprüche 6 bis 8, **dadurch gekennzeichnet, dass** jede Verbindung erste und zweite Schwingarme (11, 12) umfasst, die an einem ihrer Enden angelenkt sind, wobei der erste Schwingarm (12) mit seinem anderen Ende schwenkbar auf einer der besagten Platten befestigt ist und der zweite Schwingarm (11) mit seinem anderen Ende schwenkbar auf dem entsprechenden Finger befestigt ist.

10. Sitz nach Anspruch 3, **dadurch gekennzeichnet, dass** jede Wange schwenkbar auf einer Schwinge (13) befestigt ist, die selbst schwingend auf dem Boden (10) befestigt ist.

11. Sitz nach Anspruch 3, **dadurch gekennzeichnet, dass** die Verbindungen jeweils eine in bezug auf das Polster winkelförmig zwischen einer eingeklappten Stellung, die der ersten Konfiguration der Verbindung entspricht, und einer aktiven ausgeklappten Stellung, die der zweiten Konfiguration der Verbindung entspricht, verschiebbare Stütze (17) umfassen, und auf der der Sitz in der besagten zweiten Konfiguration ruht.

12. Sitz nach einem der Ansprüche 1 bis 11, **dadurch gekennzeichnet, dass** er rechte und linke Führungsorganpaare (8) umfasst, von denen jedes einen seitlichen vorderen Abschnitt (22) des Polsters mit dem Boden (10) verbindet und eine Vor-Zurück-Bewegung des Polsters (2) erlaubt, wobei jedes Führungsorganpaar einen Führungskeil (80) umfasst, der mit dem Boden (10) verbunden ist, und eine Führungsachse (81), die mit dem Polster (2) verbunden ist und in den Führungskeil (80) eingreift.

13. Sitz nach einem der Ansprüche 1 bis 11, **dadurch gekennzeichnet, dass** er weiterhin rechte und linke Führungsorgane umfasst, von denen jedes einen seitlichen vorderen Abschnitt des Polsters (2) mit dem Boden (10) verbindet und eine Vor-Zurück-Bewegung des Polsters (2) erlaubt, wobei jedes Organ eine Schwinge (15) umfasst, die an einem Ende auf dem Polster und an dem anderen Ende auf dem Boden (10) schwenkbar befestigt ist.

14. Sitz nach einem der Ansprüche 1 bis 13, **dadurch gekennzeichnet, dass** die Rückenlehne (3) mit einer Trennplatte (19) ausgestattet ist, die auf der Rückseite der Rückenlehne zwischen einer eingeklappten Ruhestellung und einer ausgeklappten Stellung, in der sie eine Trennwand des hinteren Fahrzeugraums darstellt, schwenkbar befestigt ist.
